# EUROPEAN PATENT APPLICATION

(11) **EP 0 785 342 A1**
(43) Date of publication of application: **23.07.1997**
(21) Application number: 97850002.3
(22) Date of filing: 10.01.1997
(51) Int. Cl.: F01N 3/28, F01N 7/00, F01N 3/06, F01N 1/08, F01N 3/02, F01N 7/18

(54) **Muffler with catalytic converter**

(30) Priority: 17.01.1996 SE 9600204
(71) Applicant: AKTIEBOLAGET ELECTROLUX, 105 45 Stockholm (SE)
(72) Inventor: Karlsson, Tord Egon Ronny, 554 66 Jönköping (SE)
(74) Representative: Erixon, Bo

(57) **Abstract**

Muffler with catalytic converter (1) composed of two main parts, a muffler housing (2) and a lid (3) which seals the muffler housing, and a catalytic converter element is mounted in the lid and an exhaust pipe (5) leads from this element out of the muffler (1), and the exhaust gas pipe (5) is located entirely in the lid, so that the exhaust gases are released via the lid (3).

## Description

### Technical field

The subject invention refers to a muffler with catalytic converter composed of two mutually demountable main parts, a muffler housing and a lid which seals the muffler housing. A catalytic converter element is mounted in the lid and an exhaust pipe leads from this element out of the muffler.

### Background of the invention

Small internal combustion engines have for a long time had comparatively high exhaust emissions. This is particularly true for engines of two-stroke type, as the combustion there is more incomplete than for four-stroke engines. Increased demands concerning exhaust emissions from small engines have lead to catalytic converter exhaust cleaning starting to be used for different small engines. This is also applicable to small engines for handheld portable tools such as chain saws etc. Demand for low weight and small size of the exhaust cleaning equipment here makes the problem especially difficult. A couple of different solutions for so called catalytic mufflers have evolved principally for chain saws. These mufflers are mounted directly to the exhaust Sport of the cylinder. Swedish patent SE 467314 shows a muffler where the catalytic converter is arranged in a muffler that is at least partly welded gas-tight together and the converter is in spaced relationship to the innerwalls on all sides of the converter element to create a heat isolation. But this easily leads to a big and heavy catalytic muffler.

Swedish patent application SE 465834 shows a catalytic muffler where the converter unit is placed in closer relationship to the lid of the muffler. On the outside of the lid is a cooler, composed of several plates, fastened to lead off the heat from the converter. The exhaust gas is let out via an exhaust pipe, which is fastened in the inner part of the muffler and debouches into its back corner, that is in a considerable distance from the lid. Cooling air from the fan of the engine is led past the mouth of the exhaust pipe. As the exhaust pipe here debouches in a considerable distance from the lid it is difficult to efficiently use the air from the cooling fan both to blend with the exhaust gases and cool the cooling plates on the lid.

### Purpose of the invention

The purpose of the subject invention is to substantially reduce the above outlined problems and at the same time provide a good exhaust gas cleaning.

### Summary of the invention

The above purpose is achieved in a muffler with catalytic converter in accordance with the invention having the characteristics appearing from the appended claims.

The muffler with catalytic converter in accordance with the invention thus is essentially characterized in that the exhaust gas pipe from the catalytic converter element leading out of the muffler is located completely in the lid, so that the exhaust gases are released via the lid. This means that both the converter element and the exhaust gas pipe are located entirely in the lid and in close relationship to each other. This means that it is possible and simple to arrange both a cooling of the converter element and a cooling and mix of the exhaust gases leaving the muffler. This is accomplished with the aid of cooling air from the fan of the engine. An important advantage is also that there is no long exhaust gas pipe leading away from the lid, but the exhaust gases are let away via the lid. In this way it is possible to create a compact and light catalytic converter muffler.

Furthermore the converter element is preferably so located in the lid that the direction in which the element is most sensitive to vibrations is essentially parallell with the crankshaft of the engine. The fastening of the converter element and the design of the connecting exhaust pipe is preferably made through depressions in plates turned towards each other. These and other charateristics and advantages of the invention will be apparent from the ensuing description of preferred embodiments and with the support of the drawing figures.

### Brief description of the drawings

The invention will be described in closer detail in the following by way of various embodiments thereof with reference to the accompanying drawing figures.

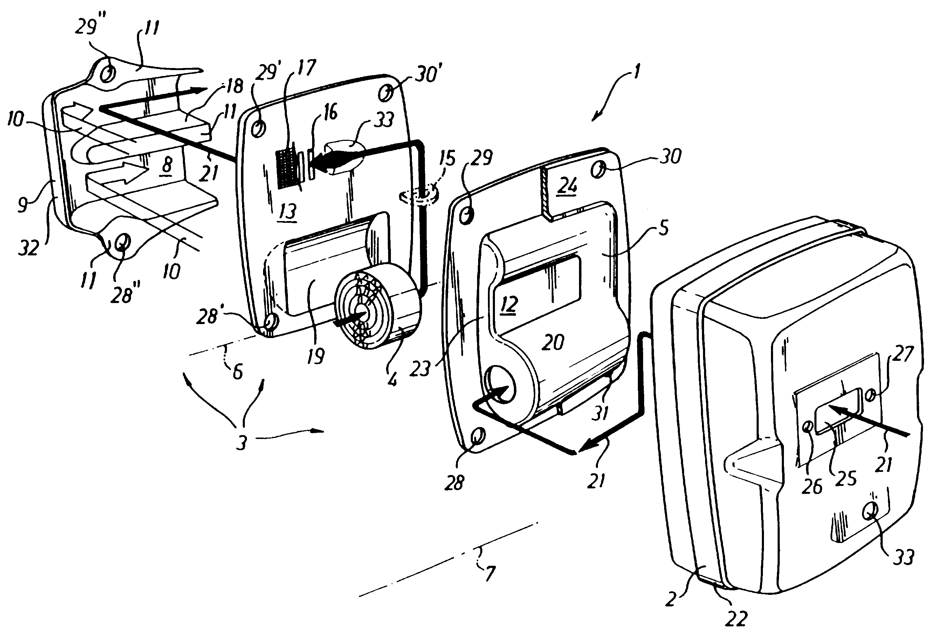

Figure 1 shows in perspective a catalic muffler according to the invention. Most parts are shown in an exploded view-manner to make the construction and functioning of the muffler more clear.

### Description of the preferred embodiments

In figure 1 numeral reference 1 designates a catalytic muffler according to the invention. It is composed of two mututally demountable main parts, a muffler housing 2 and a lid 3, which seals the muffler housing. A catalytic converter element is mounted in the lid 3 and an exhaust pipe 5 leads from this element 4 out of the muffler. The exhaust gas pipe 5 is located completely in the lid, so that the exhaust gases are released via the lid. The lid consists of several parts joined together, these parts are here shown in an exploded view. The lid is thus constructed of an inner plate 12, an outer plate 13 and a cooling air guide plate 8. The converter element 4 is placed between the inner and the outer plate 12 and 13. It is therefore fixed between these plates. The three plates 12, 13 and 8 are preferably spot welded together to constitute the lid 3. But of course they can also be joined together in other ways.

The catalytic muffler 1 is mounted to the cylinder of the engine. The muffler housing 2 is fastened to the exhaust port of the engine with screws inserted in holes 26, 27 and 33. An aperture 25 in the muffler housing 2 corresponds to the exhaust port. In the opposite side of the muffler housing 2 there is a big opening, which makes it easy to fasten screws through the holes 26, 27 and 33. Exhaust gases 21 from the exhaust port runs out into the muffler housing 2. The side of the muffler housing, that is hidden in the figure and turned away from the exhaust port aperture 25 is supplied with a fastening plane for the lid 3. This fastening plane has four tapped holes corresponding to the holes 28, 29, 30, 31. The fastening plane has as mentioned a big opening. Depressions in the inner plate 12 intended for the converter element 4 and the exhaust gas pipe 5 protrude into this opening. A gasket 24 is placed between the lid 3 and the muffler housing 2. For the sake of clearness the figure shows a part of the gasket 24 placed on the inner plate 12. Please observe that the gasket goes so far towards the middle of the plate that it goes up on the elevated parts of the plate made to house the exhaust gas pipe 5 and the converter element 4. This is also true for an elevated part 23 that is made between the other elevated parts. Therefore the gasket 24 will partly run on the surrounding elevation surrounding the converter element 4 and the exhast gas pipe 5. The fastening plane of the muffler housing 2 has as mentioned an opening corresponding to this surrounding elevation. This opening has chamferred sides. When the lid is assembled the gasket will there- fore be compressed between the surrounding elevation and the chamferred sides of the muffler housing 2. In this way a reliable seal is created between the lid and the muffler housing.

The exhaust gases 21 from the exhaust port of the engine therefore run out into the muffler housing 2, which is sealed by the lid 3 except for an aperture 20. The exhaust gases run in through the aperture 20 and through the converter element 4, which is fixed between the inner plate 12 and the outer plate 13. In this case the converter element consists of at least one strip, usually made of metal with corrugations or similar, and coated with a catalyzing layer. The strip is rolled or folded together arround a longitudinal axes 6, and the converter element is so located that its longitudinal axes 6 essentially runs parallell to the crankshaft 7. In this case the converter element consists of two strips rolled together, one corrugated and one smooth and the strips have been rolled together into a cylindrical element. This is pressed between partcylindrical depressions in the inner and the outer plate 12 and 13. Thus the longitudinal axes 6 of the converter element runs parallell to the fastening plane between the lid 3 and the muffler housing 2. This because the inner plate 12 and the outer plate 13 has a flat basic shape.

The converter element 4 can also consist of a ceramic converter element, e.g. an element extruded of ceramic material. This element 4 is preferably surrounded by a resilient material, e.g. a resilient mat or sleeve, and is placed between the plates 12, 13. The resilient material is mainly used because the ceramic element and the surrounding plates have different heat expansion.

After the exhaust gases 21 have run through the converter element 4 and been cleaned there they proceed in an exhaust gas pipe 5, which is integrated in the lid 3, and proceed to an exit 16. The exit 16 can be formed by stamped apertures in the plate 13. The exit can also be equipped with a spark arresting net 17, whose function is to catch sparks, so that they don't blow out of the muffler. The net 17 is preferably placed over the exit 16 and between the plates 12 and 13, but also other locations are possible. The exhaust gas exit 16 has here been designed in the form of so called gills. The aperture in each of these gills is turned in the opposite direction compared to the direction of flow of the exhaust gases. Thus the direction of flow of the exhaust gases is turned in the gills 16. At the gills the exhaust stream changes its direction approximately 180°. This is important since a cooling air guide plate 8 is placed on the outside of the outer plate 13 and the cooling air guide plate directs cooling air for mixing with the exhaust gases and for cooling the converter element.

The cooling air guide plate 8 is as mentioned placed in an outermost position on the lid 3, and it consists of an outer guide plate 9, which collects and directs cooling air 10 from the cooling fan of the engine between itself and parts of the lid placed inside it, and a number of abutments 11 which attach the guide plate9 to inner lid parts, by means of e.g. screws and/or welding.

The guide plate 9 has an upstream edge 32, and after the cooling air guide plate 8 has been assembled to the other lid parts the upstream edge 32 will be situated well outside the side of the plates 12 and 13. When all three plates have been joined together, e.g. by spot welding the holes 29, 29' and 29" will be in correspondance with each other as well the holes 28, 28', 28", where '- designations have been used for holes in the outer plate 13 and "- designations for holes in the cooling air guide plate 8. The upstream edge 32 of the outer guide plate 9 is directed almost parallell with the side of the muffler housing 2. Down stream the outer guide plate turns almost through 90° and thus the cooling air 10 is guided in parallell with the outside of the outer plate 13. The cooling air 10 will thus mix with the hot exhaust gases 21 so that the mixed exhaust gases will be at a lower temperature.

The cooling air 10 will also sweep over a bulge 19 in the plate 13, the converter element being housed on the inside of the bulge. As the converter element will be very hot this cooling is of great significance. In this case the outer guide plate 9 of the cooling air guide plate 8 is drawn down towards the outer plate 13 to create a centerfin 18. This centerfin devides the stream of cooling air 10 into one part that runs over the exit 16 and one part that runs over the back side 19 of the housing of the converter element. Thus it is assured that the cooling air is not unevenly distributed between these two important cooling objects. The centerfin 18 can be drawn so far down that it is on a level with the abutment 11. The centerfin 18 can thus be used as an abutment 11 so that the cooling air guide plate 8 can be splot welded to the outer plate 13 also at the centerfin 18. But evidently there is no need for the centerfin 18 to run so down that it can be used as an abutment 11.

After the engine has been stopped the cooling air guide plate 11 works as a heat shield. It prevents direct contact with hot parts on the inside and the heat they radiate.

As is evident from the figure the lid 3 consists of, apart from the cooling air guide plate 8 and the converter element 4, essentially two plates 12, 13. An inner plate 12 and an outer plate 13 and at least one of the inner plate 12 and the outer plate 13 has a depression turned away from the other plate 12, 13, so that therefore the converter element and the exhaust gas pipe 5 can be housed between the plates after these have been joined together. In the shown embodiment the cylindrical converter element 4 has been placed between depressions in both the inner plate 12 and the outer plate 13. The depression in the inner plate 12 is bigger than the depression in the outer plate 13. This is desireable because the whole aperture 20 must be located in the inner plate 12. The exhaust gas pipe 5 is however in this case formed entirely as a depression in the outer plate 12, the inner plate 13 remaining essentially flat. There is even a local bulge 33 in the outer plate 13, and this bulge is located just in front of the exit 16. This creates a local throttling and a certain change of the direction of flow towards the exit 16 that is desirable. This embodiment with a converter space and an exhaust gas pipe 5 between two plates is very desirable from many points of wiev, not least out of the cost reduction point of view. But it is of course possible, within the scoop of the invention, to use other embodiments. The converter element 4 could e.g. be placed in a housing, cylindrical or with another shape, which pass over to an exhaust gas pipe 5, which in this case is formed of a pipe with suitable shape. The converter housing and the exhaust gas pipe would then be fastened to a plate corresponding to the inner plate 12, and the outer plate 13 could be deleted. An important basic principal is that both the converter element 4 and the exhaust gas pipe 5 are located in the lid. The converter element 4 or its fastening has in many applications such a design that its sensitivity to vibrations is different in different directions. The converter element 4 is in this case so located in the lid that the direction in which the element or its fastening is most sensitive to vibrations is essentially parallell to the crankshaft 7 of the engine. This applies for the shown embodiment, and has lead to an essential increase in the life of the converter element.

A throttling 15 can be made in the exhaust gas pipe 5 and located between the converter element 4 and the exhaust gas exit 16 out of the lid, in this case this throttling is formed as a throttling washer 15 fixed between the inner- and outer plates 12, 13 and located immediately in front of the exit 16. An advantage of such throttling formed as a throttling washer is that an accurate throttling can be achieved. But the throttling can also be formed as a contraction in the exhaust gas pipe by way of a decreased depression in one or both of the plates 12, 13, or one plate can be made with a bulge which decreases the area of the channel. A main reason of using a throttling is to throttle the engine on the exhaust side to get decreased exhaust emissions. Preferably the throttling is located close to the exit 16. Of course it would also be possible to form the throttling directly in the exit 16 or in the spark arresting net 17. But a disadvantage would be that many users of the product, e.g. a chain saw, would themselves then decrease the throttling or take it away to increase the engine output in this way. This would increae the exhaust emissions and would bring a distinct risk of decreased cooling of the exhaust gases.

Further it can noted that the engines aperture 20, which lets the exhaust gases 21 into the converter element 4, usually has a smaller area than the intake area of the converter element. This results in an increased silencing effect. Also the location in the space inside the muffler housing is important for the silencing effect. Preferably the aperture 20 is located on approximately half of the space distance from the volume center of the muffler to a closely situated corner 22.

The shown embodiment refers to a muffler with two mutually demountable parts. It is however also possible to design the muffler in one part. In this case the lid is permanently mounted to the muffler housing 2, for example by way of welding, soldering or folding, and thereby the gasket 24 can possibly be eliminated. The mounting of the muffler 1 to the cylinder of the engine is arranged so that the mounting screws of the muffler can be reached from the outside of the muffler for mounting or demounting. In one version long mounting screws are used, piercing special holes in the lid 3. The holes, not shown in figure 1, are located so that they correspond with the holes 26, 27, and preferably lie by the side of the exhaust gas pipe and the catalytic converter element. This leads to long screws exposed to high temperatures. Also, as an alternative, two pipes can be mounted between the front side and the back side of the muffler, which is the usual for single part mufflers. Tunnels are hereby created leading to the mounting holes 26, 27 respectively, and short mounting screws can be used. Another alternative, as well-known, is to provide the muffler with a mounting flange, this will however increase the building length.

## Claims

1. Muffler with catalytic converter (1) composed of two main parts, a muffler housing (2) and a lid (3) which seals the muffler housing, and a catalytic converter element (4) is mounted in the lid (3) and an exhaust pipe (5) leads from this element (4) out of the muffler (1), **characterized** in that the exhaust gas pipe (5) is located completely in the lid, so that the exhaust gases are released via the lid 3).

2. Muffler with catalytic converter (1) according to claim 1, **characterized** in that in applications when the converter element (4) or its fastening has such a design that its sensitivity to vibrations is different in different directions, the converter element (4) is so located in the lid, that the direction in which the element or its fastening is most sensitive to vibrations is essentially parallell to the crankshaft (7) of the engine.

3. Muffler with catalytic converter (1) according to claim 2, **characterized** in that the catalytic converter element is composed of at least one strip, usually made of metal with corrugations or similar, coated with a catalysing layer, and the strip is rolled or folded together around a longitudinal axes (6), and the converter element is so located that its longitudinal axes (6) essentially runs parallell to the crankshaft (7).

4. Muffler with catalytic converter (1) in accordance with anyone of the preceding claims, **characterized** in that a cooling air plate (8) is placed in an outermost position on the lid (3), and the cooling air guide plate (8) consists of an outer guide plate (9) which collects and directs cooling air (10) from the cooling fan of the engine between itself and parts of a lid placed inside it, and a number of abutments (11) which attach the guide plate (9) to inner lid parts, by means of e.g. screws and/or welding.

5. Muffler with catalytic converter (1) in accordance with anyone of the preceding claims, **characterized** in that the lid (3) consists of, apart from the cooling air guide plate (8) and the converter element (4), essentially two plates (12, 13), an inner plate (12) and an outer plate (13) and at least one of the inner plate (12) and the outer plate (13) has a depression turned away from the other plate (12, 13), so that therefore the converter element and the exhaust gas pipe (5) can be housed between the plates after these have been joined together.

6. Muffler with catalytic converter (1) according to claim 5, **characterized** in that the converter element (4) is composed of strip/strips rolled together around a longitudinal axes (6) to form an element (4), and depressions with corresponding shape are made both in the inner plate (12) and the outer plate (13), which both, apart from their depressions, have a flat basic shape, thus the longitudinal axes (6) runs parallell to the mutual contact plane of the plates (12, 13).

7. Muffler with catalytic converter (1) according to claim 5, **characterized** in that the converter element (4) is a ceramic converter element, e.g. an element extruded of ceramic material, and this element (4) is surrounded by a resilient material, e.g. a resilient mat or sleeve, and is placed between the plates (12, 13).

8. Muffler with catalytic converter (1) in accordance with anyone of the preceding claims, **characterized** in that a throttling (15) is made in the exhaust gas pipe (5) and located between the converter element (4) and the exhaust gas pipe exit (16) out of the lid, and this throttling is e.g. made as a throttling washer (15) fixed between the inner- and outer plates (12, 13) or as a contraction in the exhaust gas pipe created by a decreased depression in one or both of the plates (12, 13) or that one plate is made with a bulge, which decreases the channel area.

9. Muffler with catalytic converter (1) according to claim 8, **characterized** in that the throttling (15) is formed as a throttling washer (15) fixed between the inner- and outer plate (12, 13) and located immediately in front of the exit (16).

10. Muffler with catalytic converter (1) in accordance with anyone of the preceding claims,
**characterized** in that the exit (16) of the exhaust gas pipe is equipped with a spark arresting net (17), that is a net usually manufactured of metal threads.

11. Muffler with catalytic converter (1) in accordance with anyone of the preceding claims,
**characterized** in that the outer guide plate (9) of the cooling air guide plate (8) is drawn down towards the outer plate (13) to create a centerfin (18), and this centerfin devides the stream of cooling air (10) into one part that runs over the exit (16) and one part that runs over the back side (19) of the housing of the converter element.

12. Muffler with catalytic converter (1) in accordance with anyone of the claims 5-11,
**characterized** in that the inner plate (12) has an aperture (20), which lets the exhaust gases (21) to the converter element (4), the aperture (20) is approximately located on half the space distance from the volume center of the muffler to a closely situated corner (22).

13. Muffler with catalytic converter (1) in accordance with anyone of the claims 5-12,
**characterized** in that the inner plate (12) has an elevated part (23), which runs between the elevated part for the converter element (4) and the elevated part for the exhaust gas pipe (5), so thus there is a surrounding elevation surrounding the converter element (4) and the exhaust gas pipe (5), and the inner plate is equipped with a gasket (24), which runs on the surrounding elevation and a depression corresponding to this elevation is made in the muffler housing (2), so that when fastening the lid (3) on the muffler housing (2) the gasket (24) is compressed between the elevation and the depression.
